# EUROPEAN PATENT SPECIFICATION

(11) **EP 1 192 824 B1**
(45) Date of publication and mention of the grant of the patent: **19.10.2011**
(21) Application number: 00941947.4
(22) Date of filing: 04.07.2000
(51) Int. Cl.: H04W 4/14

(54) **A METHOD OF TRANSMITTING DATA ITEMS TO A NUMBER OF MOBILE STATIONS, A MOBILE STATION, AND A STORAGE MODULE**
VERFAHREN ZÜR ÜBERTRAGUNG VON DATENEINHEITEN ZU EINER ANZAHL VON MOBILSTATIONEN, MOBILSTATION SOWIE SPEICHERMODUL
PROCEDE DE TRANSMISSION D'ELEMENTS DE DONNEES VERS PLUSIEURS STATIONS MOBILES, STATION MOBILE ET MODULE DE STOCKAGE

(30) Priority: 05.07.1999 DK 97299; 05.10.1999 DK 142699
(43) Date of publication of application: 03.04.2002
(73) Proprietor: TeleCommunication Systems, Inc., Annapolis, MD 21401 (US)
(72) Inventor: KROLL, Bo, London W9 1AU (GB)
(74) Representative: Boesen, Johnny Peder
(86) International application number: PCT/DK2000/000364
(87) International publication number: WO 2001/003456

(56) References cited:
- EP-A1- 0 562 890
- EP-A2- 0 804 046
- WO-A2-98/38820
- GB-A- 2 317 246

## Description

The invention relates to a method of transmitting data items from a service provider through at least one base station to a large number of mobile stations, a mobile station comprising a storage module for storing data items, and a display for presenting data items to a user, the method comprising the steps of broadcasting said data items through the at least one base station, receiving said data items in the mobile station, and storing received data items in the storage module for subsequent presentation on the display. Further the invention relates to a mobile station for receiving such data items, and a storage module for use in such a mobile station.

Although mobile terminals, such as e.g. pagers and cellular telephones, are mostly used for two-way communication between a base station and each of a number of mobile terminals, it is also well known to transmit identical information to a large number of mobile terminals simultaneously. Examples of such information could be football results or other sports scores sent during an ongoing game, financial information such as stock exchange rates, weather reports, traffic information and airline schedules. The information is transmitted as text-messages to the mobile terminal and displayed to the user of the terminal. Such services are often referred to as Value Added Services.

For years such services have been used in connection with pages, but pagers have the disadvantage that, normally, a subscriber to a Value Added Service must buy a pager dedicated to this purpose only, which makes the initial costs high. It is also known to use mobile telephones, such as GSM phones, for this purpose, in which case it is possible to use a terminal which is already used by the subscriber for normal two-way telephone communication. This reduces the initial costs considerably.

One way of transmitting such services to mobile telephones is the so-called Short Message Service (SMS) which is a point-to-point service in which a message can be sent to or from one specific mobile terminal. However, in this service messages must be sent to each mobile terminal one after the other, and due to the high number of subscribers to these services SMS will normally be too slow to get the information to all recipients in a reasonable time.

Another way is the so-called Cell Broadcast Service in which messages are broadcast to every mobile station in a certain area such that all recipients get the information simultaneously. Although in some respects cell broadcast is ideal for the dissemination of most categories of value added services, it is rarely used because the bandwidth is too small in most cases to support medium density data transmission needed for such services, such as real-time financial information services.

Also some higher speed data channels, e.g. GSM data, WAP and various data channels of CDMA transmission systems are available, but these are much more expensive in use and thus less relevant in this situation.

Current generations of GSM and CDMA phones all incorporate a mutually compatible storage module in the form of a SIM card (Subscriber Identity Module). The original design purpose of the SIM card is to handle the user authentication process on behalf of the network operator and the end-user to ensure correct billing and provide comprehensive safeguards against misuse for both parties. Therefore, SIM cards incorporate a number of functions to handle these tasks. Although some of these SIM card functionalities may also be used for the provision of Value Added Services, this was never originally envisioned, and, therefore, these functionalities are not always well suited, or comprehensive enough, for this purpose.

GB 2 317 246 shows a mobile station for a GSM system utilizing a SIM card. The SIM has an operating system adapted to perform compression and decompression of data items stored in the SIM. Data items are received by the mobile station and transferred to the SIM in the standard (non-comprcssed) format. Also data items presented from the SIM to the mobile station are in the standard format. Thus the compression and decompression is only used internally on the SIM in order to save memory space, and it does not affect the transmission of data to an from the mobile station.

It is an object of the invention to provide a method of transmitting data items to a large number of mobile stations in which an amount of data sufficient for value Added Services can be transmitted without having to use the more expensive higher speed data channels, and in which the initial costs are kept at a low level.

According to the invention, this is achieved in that the method further comprises the steps of broadcasting said data items in a compressed format, and performing on the storage module a decompression of received data items.

Broadcasting the data items in a compressed format, ensures that a sufficient amount of data can be transmitted over low cost channels, such as cell broadcast, and using the storage module for performing the decompression keeps the initial investment low, because a new, subscriber only has the marginal hardware coat of a new storage module which is used in his existing mobile terminal.

When the data items are broadcasted in strings of data items, each string further comprising information indicating that the string is in a compressed format, it is possible to transmit some data in the compressed format, while others are transmitted uncompressed, because the storage module is able to decide from this information whether a given data item needs to be decompressed or not.

When the received data items are stared in the storage module in the compressed format and decompressed subsequently, the demand for memory capacity in the storage module is decreased so that more data items may be stored in a given size of memory.

Alternatively, the decompression of received data items is performed before the data items are stored in the storage module. In this case it can be checked directly after reception of a data item whether this item is needed by the mobile station. By storing only those items needed by the mobile station considerable amounts of memory capacity in the storage module can be saved.

If each string further comprises information indicating a type of compressed format in which the string is broadcasted, it is further possible to use different types of compression in the system.

As mentioned, the invention further relates to a mobile station for receiving data items from a service provider through at least one base station, said mobile station comprising a display for presenting data items to a user, and a storage module and means for storing received data items in the storage module for subsequent presentation on the display. When the mobile station further comprises means for performing on the storage module a decompression of data items received in a compressed format, a mobile station suited for the above-mentioned method is provided.

A further improvement is achieved when the storage module is removable. This allows the module to be changed between mobile stations, and thus any mobile station compatible with the storage module can be used for receiving the data items, In an expedient embodiment, the mobile station is a GSM cellular telephone and the storage module is a SIM card (Subscriber Identity Module). The GSM cellular telephone may support WAP, in which case WAP may be used for e.g. an initial negotiation dialog.

The data items may be broadcasted in a Cell Broadcast service, as this service is well suited for getting the samme information to several mobile stations at the same time.

As mentioned, the invention further relates to a storage module for use in a mobile station adapted to receive data items from a service provider through at least one base station, said storage module comprising means for storing received data items. When the storage module further comprises means for performing a decompression of data items received in a compressed format, a storage module suited for the above-mentioned method is provided.

A further improvement is achieved when the storage module is removable. This allows the module to be changed between mobile stations, and thus any mobile station compatible with the storage module can be used for receiving the data items. In an expedient embodiment, the storage module is a SIM card (Subscriber Identity Module) for use in a GSM cellular telephone or a CDMA cellular telephone.

The invention will now be described more fully below with reference to the drawing, in which
figure 1 shows a network in which the invention may be used,
figure 2 shows a mobile terminal for use in the invention, and
figure 3 shows the mapping of memory according to the invention.

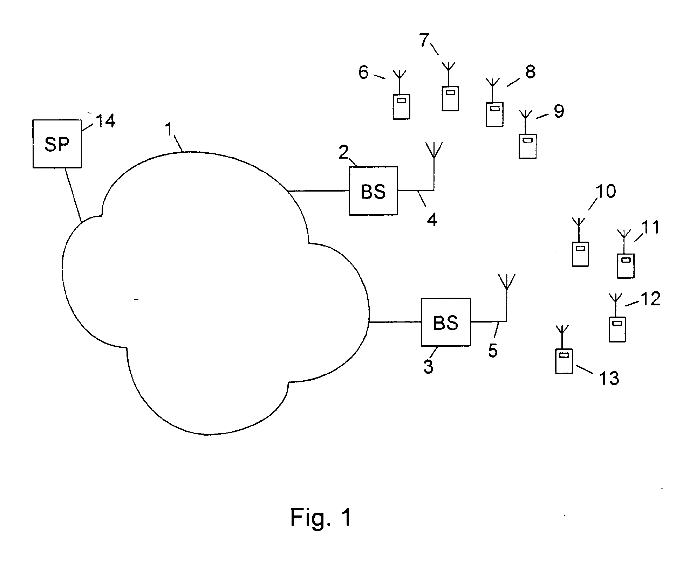

Figure 1 shows a network 1 in which the invention may be used. The network could be a cellular telephone system, which may e.g. be a GSM system, comprising two base stations 2 and 3. Further, the network may comprise a number of network elements (not shown) that may be base stations of the same type, or they may be other types of network elements well known in telecommunications networks. The base stations 2, 3 are provided with antennas 4, 5 by means of which they communicate with a number of mobile stations 6, 7, 8, 9, 10, 11, 12 and 13 such as cellular telephones.

Normally, a base station communicates on a two-way basis with each mobile station within its cell individually. This is the case e.g. when one of the cellular telephones is used for a telephone conversation with another telephone (mobile or not) somewhere else in the network.

Although the network is mainly used for individual communication with the mobile stations it may also be used in connection with a so-called Cell Broadcast service, which means that a base station broadcasts a common message which may be received by any mobile station within its cell simultaneously. This service is mainly used for text messages which are intended to be presented on a display of the telephones. This service enables the network operator to send a common message to all mobile stations at the same time. Messages of this type may be from the network operator himself or they may be sent on behalf of an external service provider. Figure 1 shows such a service provider 14 connected to the network. Examples of information from a service provider could be football results or other sports scores sent during an ongoing game, stock exchange rates, weather reports, traffic information and airline schedules.

The network may also be used for the transmission of SMS (Short Message Service) messages. These are also text messages and they may be sent either to- a mobile station or from a mobile station. A common text message intended for several mobile stations may also be sent as an SMS message, but then it must be sent to each mobile station individually, one after the other. However, if the information is sent to a large number of mobile stations it will take a long time before they have all received it.

In the described embodiment Cell Broadcast is used for the transmission of common messages from the service provider 14 to a number of the mobile stations 6-13, while SMS is used for two-way communication between the service provider and individual mobile stations during a service dialogue, which may typically take place when a new subscriber is connected to the service, or when a subscriber wants some changes to the subscription.

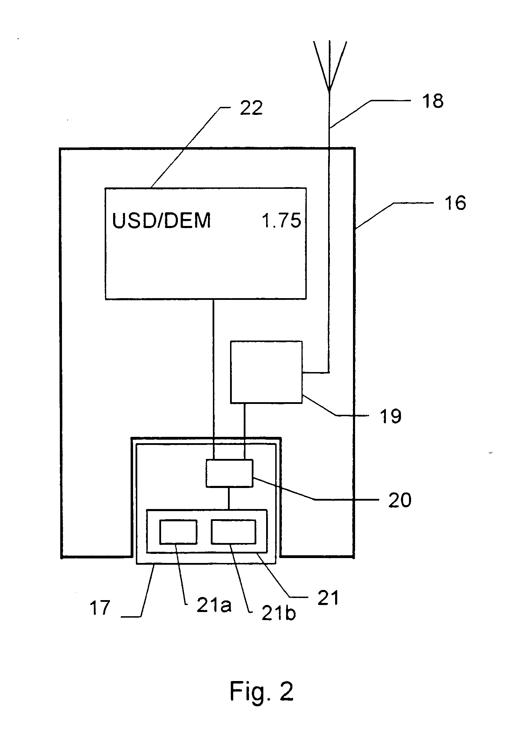

Figure 2 shows an example of a mobile terminal 16 which may be used according to the invention. The mobile terminal could be a normal GSM telephone and as can be seen, the telephone is connected to a removable SIM card (Subscriber Identity Module), which will be described in further detail below. The telephone 16 further comprises a transmit/receive aerial 18, a transmit/receive circuit 19 and a display 22 on which text messages may be displayed for the user.

The SIM card 17 connected to the telephone 16 comprises a processor or control circuit 20 and a memory 21. The memory 21 is divided into two sections, i.e. a mask-programmed ROM 21a containing the SIM operating system and other program code that will be described in further detail, and a RAM and/or EEPROM 21b for storage of data items and for use by the processor circuit 20 during operation.

When data items in the form of text messages are received from a service provider of a value added service, they are received by the aerial 18 and routed through the circuit 19 to the SIM card 17 on which the processor circuit 20 stores the data item in the memory 21b. Subsequently, the data items stored in the memory may be displayed on the display 22. Normally, a specific data item is requested by the user by means of a keypad (not shown), and the requested data item (provided it is actually stored in the memory 21b) is fetched from the memory by the processor circuit 20 and transferred to the display 22. In figure 2 an example of a financial information, i.e. an exchange rate, is shown.

According to the invention the data items distributed from the service provider 14 and transmitted as cell broadcast to the mobile stations are transmitted in a compressed format. The types of compression used are well known and described in the art and, thus, it will not be described in further detail here. For instance, in case of financial information certain specialized compression algorithms take advantage of the highly ordered nature of the input information. In case of free text information, different types of compression algorithms, e.g. of the Hufmann or LZW class, are more efficient and suitable.

In the receiver end a corresponding decompression application is embedded and applied on the SIM card 17. The decompression algorithm is embedded as instructions in the ROM memory 21a, such that the processor circuit 20 is able to perform the decompression function. Several different decompression algorithms corresponding to the above-mentioned may be embedded, thus allowing for the free use of these by the service provider. The advantage of this approach is the ability to separately apply two or more different kinds of data compression/decompression adapted to and optimized for different types of data. Embedding the decompression application on the SIM card 17 means that a user wanting the value added service of a service provider must buy a special SIM card with the corresponding decompression application embedded, but this cost is much less than the cost of a specialized terminal needed in prior art solutions.

After decompression, the expanded value added service data are routed to the display of the receiver and/or to the appropriate memory locations on the SIM card. As a result of transmitting the data in a compressed format and decompressing on the SIM card is a significant reduction in transmission volume and the costs to the mobile phone network operator(s) and/or to the end-users of value added services.

The SIM card will typically have access to read and receive several incoming data channel subsets of the general operating standard to which it belongs. E.g. a GSM receiver incorporates separately dedicated data channels (Cell Broadcast, SMS and GSM data), which may all be routed through and read by the SIM card. In the prior art, all SMS services are thus routed through the SIM card to the appropriate SIM card memory locations and to the display of the receiver without the ability to apply any data decompression. When the general data decompression module is embedded and used on the SIM card, this may be applied to any incoming value added services on any data channel, provided only that this data channel, e.g. SMS, is accessible for post reception processing in the SIM card by the general data decompression module, which is also embedded in the SIM card.

Normally, the data items are sent in data strings, and the compressed data strings may be prefixed with unique flag(s) or a Message Identifier Data (MID) unequivocally identifying the data string or message type and the specifically appropriate decompression algorithm to be used upon reception and routing to the SIM card application. E.g. in the case of Cell Broadcast on GSM phones this is accomplished by the uniquely identifiable Cell Broadcast Message Identifier (CBMID) as defined in the GSM standard, which prefixes the compressed data string. A standard data input interface as well as data output interface to the appropriate memory locations allows the interchangeable application of different types of decompression if necessary. Having read the unequivocal data string or message flag or header, the data decompression module embedded in the SIM card subsequently decompresses the incoming data stream as invoke by this particular flag or message identifier (MID).

The received data items may also, as an alternative, be stored on the SIM card in the compressed form in order to save memory capacity. They are then decompressed when they are fetched from the memory for display on the display of the terminal. Another and very efficient way of saving memory capacity on the SIM card is described below this is needed because many value added services require memory capacity much in excess of what is available on the SIM card.

In the current art of SIM card Memory Management the SIM cards include a general Menu Function found in the SIM card Tool Kit Application, (STA). This menu function shows the user which functionalities and value added services are available, e.g. routed to and stored in the SIM card, in the case of a value added service. While the SIM card menu function is thus to some extent "aware" of the underlying SIM card memory organisation, it does not partake in any actual underlying memory management apart from simple storing and retrieving tasks within the given physical memory of the SIM card. As the memory of the SIM card is quite limited this presents a serious limitation to the number and "depth" of value added services, which can be maintained by the SIM card memory without memory overflow.

According to the invention, a dynamic application is embedded in a SIM card, which is aware of and able to configure a part of the SIM card memory reserved for value added services support. The application treats the actually available (physical as opposed to virtual) SIM memory as a "cache like" application. Mostly, or often, data requests from the user will be repetitive. In the case of financial information the user is likely to request the same stock price(s) several consecutive times before altering his request. The strategy of the cache like memory application seeks to benefit statistically from this behaviour by directly making available in the physical SIM card memory the data requested. Logically, this is achieved by linking or "mapping" the logical address of the large, or unlimited, virtual memory with a corresponding address in the physical SIM card memory. The large virtual memory corresponds to a physical memory which is present at the service provider.

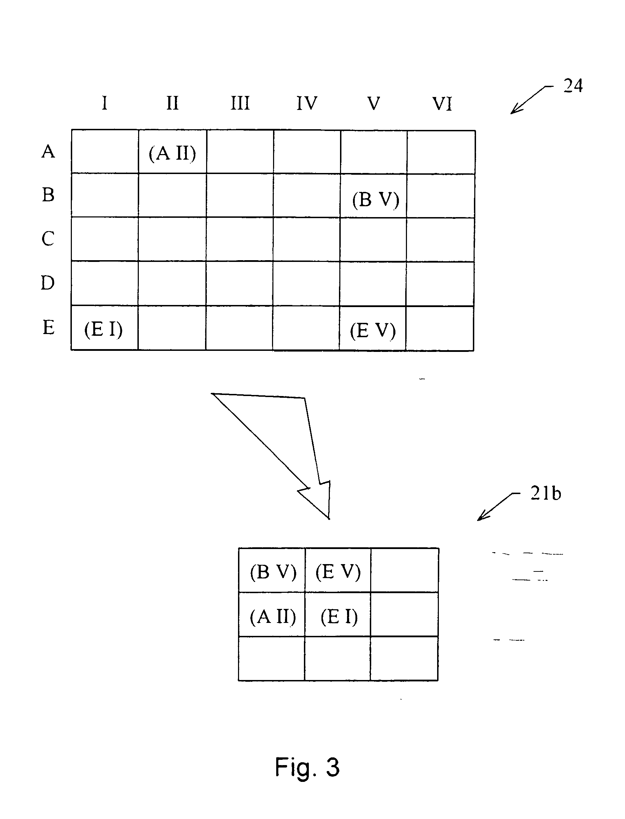

This process of mapping is illustrated in figure 3. The large virtual memory is shown as the memory 24 at the service provider. For the purpose of illustration this memory is here shown as having 30 memory locations, of which the rows are labelled A, B, C, D and E, and the columns labelled I, II, III, IV, V and VI. Each memory location corresponds to a data item and is labelled by its row and column, e.g. (A II). In the reality there are many more locations, typically several thousands. The physical memory 21b of a mobile terminal can accommodate only a fraction of these data items. In the example, the memory locations (B V), (E V), (A II) and (E I) of the large virtual memory are stored in the memory 21b. The reason for selecting these four items may be that the user subscribes to only these four items, or they may be the four most recently used by the user. In the memory 21b of other mobile terminals, different memory locations will typically be stored.

When the user of a terminal requests one of those items stored in the memory 21b of his terminal, the item will be fetched from the memory and displayed on the display immediately. Sometimes, data will be requested by the user corresponding to data addresses "outside" the current contents of the physical memory 21b. This elicits an automatic data request and "fill-up" dialogue with the service provider, which is invisible to the user. The freshly filled up data location is then mapped and copied to the physical memory. If the memory is already full, then another item will be remapped to the virtual memory and deleted from the physical memory (First In First Out Principle) to make room for the mapping to physical memory of the new request.

Alternatively, all the data items of the large virtual memory 24 are transmitted cyclically, such that each data item in the individual mobile terminals are all updated at the same rate in sampled real-time, typically every minute. This means that the four items (B V), (E V), (A II) and (E I) stored in the memory 21b will be updated at this rate. When a data item corresponding to data addresses outside the current contents of the physical memory is requested, the new data item is read next time it is updated, and subsequently stored in the physical memory and displayed for the user.

The invention allows the service provider and/or the network operator to accurately allocate to each value added service a specific memory array (set of coordinates) location, e.g. "Sports in memory array Ll - 025, Financial Information, type "Stock Market" in memory array Al - K 80" and so on. This is advantageous in particular for the network operator(s) who wish(es) to efficiently pack as large an offering of value added services to the networks users/subscribers as possible. In all cases each value added service is represented and selectable via the menu in the display. This menu is established and maintained using the-standard SIM Toolkit Application or STA.

Although a preferred embodiment of the present invention has been described and shown, the invention is not restricted to it, but may also be embodied in other ways within the scope of the subject-matter defined in the following claims. As an example, all such mobile phone receivers, which incorporate a Subscriber Identity Module, or so-called SIM card, e.g. mobile phones encompassed by the most common industry standards such as GSM, WAP, GPRS, UMTS and/or CDMA, may be used in connection with the invention.

## Claims

1. A method of transmitting data items from a service provider (14) through at least one base station (2, 3) to a mobile station (16) comprising a subscriber identity module (17) with a storage module (21b) for storing data items and a display (22) for presenting data items to a user, the method comprising the steps of:
• transmitting said data items through the at least one base station (2, 3),
• receiving said data items in the mobile station (16), and
• storing received data items in the storage module (21b) for subsequent presentation on the display (22),
**characterized in that** the method further comprises the steps of:
• transmitting said data items by broadcasting the data items in a compressed format to a number of mobile stations (6, 7, 8, 9, 10, 11, 12, 13; 16),
• performing on said subscriber identity module (17) a decompression of received data items;
• broadcasting said data items in strings of data items, each string further comprising information indicating that the string is in a compressed format.

2. A method according to claim 1, **characterized in that** the received data items are stored in the storage module (21b) in the compressed format and decompressed subsequently.

3. A method according to claim 1, **characterized in that** said decompression of received data items is performed before the data items are stored in the storage module (21b).

4. A method according to claims 1-3, **characterized in that** each string further comprises information indicating a type of compressed format in which the string is broadcasted.

5. A mobile station (16) for receiving data items from a service provider (14) through at least one base station (2, 3), said mobile station comprising
• a display (22) for presenting data items to a user, and
• a subscriber identity module (17) with a storage module (21b) and means for storing received data items in the storage module for subsequent presentation on the display (22),
**characterized in that** the mobile station further comprises means for receiving broadcasted data items; and means for performing on said subscriber identity module (17) a decompression of data items received in a compressed format; and that the mobile station is further configured to receive said data items in strings of data items, each string further comprising information indicating that the string is in a compressed format.

6. A mobile station according to claim 5, **characterized in that** said subscriber identity module (17) is removable.

7. A mobile station according to claim 6, **characterized in that** it is adapted to be used as a GSM cellular telephone.

8. A mobile station according to claim 7, **characterized in that** the GSM cellular telephone supports WAP.

9. A mobile station according to claims 5-8, **characterized in that** the data items are broadcasted in a Cell Broadcast service.

10. A subscriber identity module (17) for use in a mobile station (16) adapted to receive data items from a service provider (14) through at least one base station (2, 3), said subscriber identity module (17) comprising means for storing received data items,
**characterized in that** the subscriber identity module (17) further comprises means for receiving broadcasted data items; and means for performing a decompression of data items received in a compressed format; and that the subscriber identity module is further configured to receive said data items in strings of data items, each string further comprising information indicating that the string is in a compressed format.

11. A subscriber identity module according to claim 10,
**characterized in that** it is removable.

12. A subscriber identity module according to claim 11,
**characterized in that** it is adapted to be used in a GSM cellular telephone or a CDMA cellular telephone

## Patentansprüche

1. Verfahren zur Übertragung von Dateneinheiten von einem Diensteanbieter (14) zu einer Mobilstation (16) durch mindestens eine Basisstation (2, 3), welche Mobilstation ein Teilnehmeridentitätsmodul (17) mit einem Speichermodul (21 b) zur Speicherung von Dateneinheiten und einer Anzeige (22) zur Darstellung von Dateneinheiten für einen Benutzer umfasst, welches Verfahren die folgenden Schritte umfasst:
• Übertragung der Dateneinheiten durch die mindestens eine Basisstation (2, 3),
• Empfang der Dateneinheiten in der Mobilstation (16), und
• Speicherung der empfangenen Dateneinheiten im Speichermodul (21 b) zur nachfolgenden Darstellung in der Anzeige (22),
**dadurch gekennzeichnet, dass** das Verfahren ferner die folgenden Schritte umfasst:
• Übertragung der Dateneinheiten durch Rundsenden der Dateneinheiten in einem komprimierten Format zu einer Anzahl von Mobilstationen (6, 7, 8, 9, 10, 11, 12, 13; 16),
• Durchführung einer Dekompression der empfangenen Dateneinheiten auf dem Teilnehmeridentitätsmodul (17);
• Rundsenden der Dateneinheiten in Ketten von Dateneinheiten, wobei jede Kette ferner Informationen zum Vorliegen der Kette in einem komprimierten Format enthält.

2. Verfahren nach Anspruch 1, **dadurch gekennzeichnet, dass** die empfangenen Dateneinheiten in dem Speichermodul (21 b) in dem komprimierten Format gespeichert und nachfolgend dekomprimiert werden.

3. Verfahren nach Anspruch 1, **dadurch gekennzeichnet, dass** die Dekompression empfangener Dateneinheiten vor der Speicherung der Dateneinheiten in dem Speichermodul (21 b) durchgeführt wird.

4. Verfahren nach den Ansprüchen 1 bis 3, **dadurch gekennzeichnet, dass** jede Kette ferner Informationen enthält, die den Typ des komprimierten Formats angeben, in welchem die Kette rundgesendet worden ist.

5. Mobilstation (16) zum Empfang von Dateneinheiten von einem Diensteanbieter (14) durch mindestens eine Basisstation (2, 3), welche Mobilstaion umfasst
• eine Anzeige (22) zur Darstellung von Dateneinheiten für einen Benutzer, und
• ein Teilnehmeridentitätsmodul (17) mit einem Speichermodul (21b) und Mittel zur Speicherung empfangener Dateneinheiten in dem Speichermodul zur nachfolgenden Darstellung in der Anzeige (22),
**dadurch gekennzeichnet, dass** die Mobilstation ferner Mittel zum Empfang rundgesendeter Dateneinheiten; und Mittel zur Durchführung einer Dekompression von in einem komprimierten Format empfangenen Dateneinheiten auf dem Teilnehmeridentitätsmodul (17) umfasst; und dass die Mobilstation ferner dazu ausgebildet ist, die Dateneinheiten in Ketten von Dateneinheiten zu empfangen, wobei jede Kette ferner Informationen enthält, die angeben, dass die Kette in einem komprimierten Format vorliegt.

6. Mobilstation nach Anspruch 5, **dadurch gekennzeichnet, dass** das Teilnehmeridentitätsmodul (17) abnehmbar ist.

7. Mobilstation nach Anspruch 6, **dadurch gekennzeichnet, dass** sie zur Verwendung als ein GSM-Mobiltelefon ausgebildet ist.

8. Mobilstation nach Anspruch 7, **dadurch gekennzeichnet, dass** das GSM-Mobiltelefon WAP unterstützt.

9. Mobilstation nach den Ansprüchen 5 bis 8, **dadurch gekennzeichnet, dass** die Dateneinheiten in einem Cell Broadcast Service rundgesendet werden.

10. Teilnehmeridentitätsmodul (17) zur Verwendung in einer Mobilstation (16), welche zum Empfang von Dateneinheiten von einem Diensteanbieter (14) durch mindestens eine Basisstation (2, 3) ausgebildet ist, welches Teilnehmeridentitätsmodul (17) Mittel zur Speicherung empfangener Dateneinheiten umfasst,
**dadurch gekennzeichnet, dass** das Teilnehmeridentitätsmodul (17) ferner Mittel zum Empfang rundgesendeter Dateneinheiten; und Mittel zur Durchführung einer Dekompression von in einem Komprimierten Format empfangenen Dateneinheiten umfasst; und dass das Teilnehmeridentitätsmodul ferner zum Empfang der Dateneinheiten in Ketten von Dateneinheiten ausgebildet ist, wobei jede Kette ferner Informationen enthält, die angeben, dass die Kette in einem komprimierten Format vorliegt.

11. Teilnehmeridentitätsmodul nach Anspruch 10, **dadurch gekennzeichnet, dass** es abnehmbar ist.

12. Teilnehmeridentitätsmodul nach Anspruch 11, **dadurch gekennzeichnet, dass** es zur Verwendung in einem GSM-Mobiltelefon oder in einem CDMA-Mobiltelefon ausgebildet ist.

## Revendications

1. Procédé de transmission d'éléments de données depuis un fournisseur de services (14) par au moins une station de base (2, 3) à une station mobile (16) comprenant un module d'identification de l'abonné (17) avec un module de stockage (21 b) pour stocker les éléments de données, et un affichage (22) pour présenter des éléments de données à un utilisateur, le procédé comprenant les étapes suivantes:
• la transmission desdits éléments de données par au moins une station de base (2, 3),
• la réception desdits éléments de données dans la station mobile (16), et
• le stockage desdits éléments des données reçus dans le module de stockage (21 b) pour présentation ultérieure sur l'affichage (22),
**caractérisé en ce que** le procédé comprend en outre les étapes de:
• la transmission desdits éléments de données par la télédiffusion desdits éléments de données dans un format compressé à un nombre de stations mobiles (6, 7, 8, 9, 10, 11, 12, 13; 16),
• l'exécution sur ledit module d'identification de l'abonné (17) d'une décompression des éléments de données reçus;
• la télédiffusion desdits éléments de données en chaînes d'éléments de données, chaque chaîne comprenant en outre des informations indiquant que la chaîne est dans un format compressé.

2. Procédé selon la revendication 1, **caractérisé en ce que** les éléments de données reçus sont stockés dans le module de stockage (21 b) dans le format compressé et décompressé par la suite.

3. Procédé selon la revendication 1, **caractérisé en ce que** la décompression des éléments de données reçus est effectuée avant que les éléments de données ne soient stockés dans le module de stockage (21 b).

4. Procédé selon les revendications 1 à 3, **caractérisé en ce que** chaque chaîne comprend en outre des informations indiquant un type de format compressé dans lequel la chaîne est télédiffusée.

5. Station mobile (16) pour la réception des éléments de données depuis un fournisseur de services (14) par au moins une station de base (2, 3), ladite station mobile comprenant
• un affichage (22) pour présenter des éléments de données à un utilisateur, et
• un module d'identification de l'abonné (17) avec un module de stockage (21 b) et des moyens de stockage des éléments de données reçus dans le module de stockage pour une présentation ultérieure sur l'affichage (22),
**caractérisée en ce que** la station mobile comprend en outre des moyens pour recevoir des éléments de données télévisés; et des moyens pour effectuer sur ledit module d'identification de l'abonné (17) une décompression des éléments de données reçus dans un format compressé; et que la station mobile est en outre configurée pour recevoir lesdits éléments de données en chaînes d'éléments de données, chaque chaîne comprenant en outre des informations indiquant que la chaîne est dans un format compressé.

6. Station mobile selon la revendication 5, **caractérisée en ce que** ledit module d'identification de l'abonné (17) est amovible.

7. Station mobile selon la revendication 6, **caractérisée en ce qu'**elle est adaptée pour être utilisée en tant qu'un téléphone cellulaire GSM.

8. Station mobile selon la revendication 7, **caractérisée en ce que** le téléphone cellulaire GSM supporte le WAP.

9. Station mobile selon les revendications 5 à 8, **caractérisée en ce que** les éléments de données sont télédiffusés dans un service de diffusion cellulaire.

10. Module d'identification de l'abonné (17) à utiliser dans une station mobile (16) adaptée pour recevoir des éléments de données depuis un fournisseur de services (14) par au moins une station de base (2, 3), ledit module d'identification de l'abonné (17) comprenant des moyens de stockage des éléments de données reçus,
**caractérisé en ce que** le module d'identification de l'abonné (17) en outre comprend des moyens pour recevoir des éléments de données télédiffusés; et des moyens pour effectuer une décompression des éléments de données reçus dans un format compressé; et que le module d'identification de l'abonné est en outre configuré pour recevoir lesdits éléments de données en chaînes d'éléments de données, chaque chaîne comprenant en outre des informations indiquant que la chaîne est dans un format compressé.

11. Module d'identification de l'abonné selon la revendication 10, **caractérisé en ce qu'**il est amovible.

12. Module d'identification de l'abonné selon la revendication 11, **caractérisé en ce qu'**il est adapté pour une utilisation dans un téléphone cellulaire GSM ou un téléphone cellulaire CDMA.
